# EUROPEAN PATENT SPECIFICATION

(11) **EP 0 720 157 B1**
(45) Date of publication and mention of the grant of the patent: **08.12.1999**
(21) Application number: 95120681.2
(22) Date of filing: 28.12.1995
(51) Int. Cl.: G11B 20/00, G11B 20/10, G06F 3/06

(54) **Video compact disc drive**
Antriebsgerät für Video Compact Disc
Appareil d'entraînement à disque compact vidéo

(30) Priority: 29.12.1994 US 366044
(43) Date of publication of application: 03.07.1996
(73) Proprietor: Mitsumi Electric Co., Ltd., Chofu-shi, Tokyo (JP)
(72) Inventor: Sugie,Noboru c/oAlpha Peripherals, Irvine, CA 92714 (US); Tanaka, Akio c/o Mitsumi Electric Co.,Ltd., Santa Clara, CA 95054 (US)
(74) Representative: Fiener, Josef

(56) References cited:
- EP-A- 0 691 652
- US-A- 5 313 443
- PATENT ABSTRACTS OF JAPAN vol. 94, no. 012 & JP-A-06 339117 (MATSUSHITA ELECTRIC IND CO LTD), 6 December 1994,
- PATENT ABSTRACTS OF JAPAN vol. 95, no. 010 & JP-A-07 284064 (SONY CORP), 27 October 1995,

## Description

### Field of the Invention

The present invention relates to a video compact disc drive, and more particularly, to an improved structure of video compact disc drive for achieving a motion picture reproduction along with a wide variety of conventional applications of compact discs and also providing a new interface structure of a video disc drive. The video disc drive of the present invention also accomplishes a high speed video data processing which can obviate data skip problems in the data reproduction process.

### Background of the Invention

A compact disc (hereinafter "CD") is an optical digital storage device having a disc diameter of 120 mm with a track pitch of 1.6 micro meter. CDs are widely used as audio discs (CD-DA) for CD players and data storage (CD-ROM) for host computers. With the improvement of technology in increasing the capacity of data storage, CDs are now considered to be one of the major tools in what is called a multi-media device or a multi-media communication. One of the new applications of CDs is to store and reproduce video image data as well as digital audio data, for example, a movie, Karaoke (sing along) and etc.

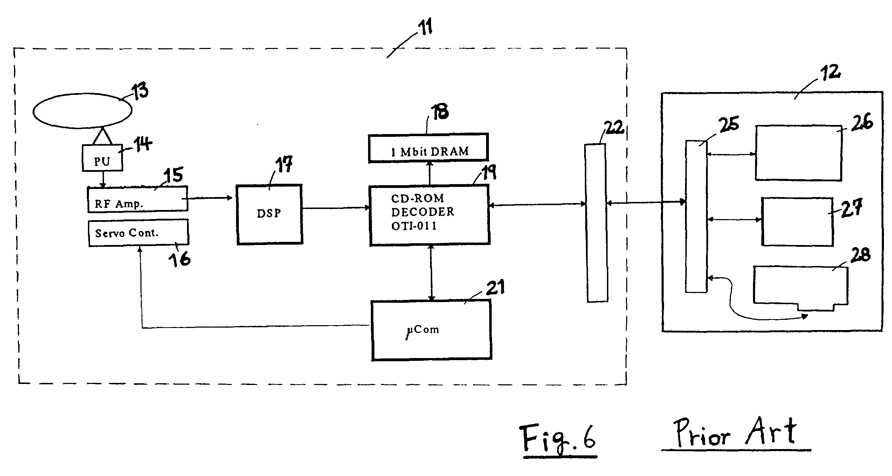

Figure 6 shows an example of conventional system for reproducing a motion picture, digital audio data or other computer data from a CD. In Figure 6, a disc drive 11 and a host computer 12 are connected to reproduce video data from a CD installed in the disc drive 11. The disc drive 11 includes a compact disc (CD) 13, an optical unit 14 (pick up), an RF amplifier 15, a servo controller 16, a digital signal processor 17, a dynamic RAM 18, a CD-ROM decoder 19, a micro-computer 21 and an interface bus 22. The host computer 12 includes an interface bus 25, a central processing unit (CPU) 26, a RAM 27 and an add-on board 28.

The micro-computer 21 controls the overall operation of the disc drive 11 based on the instruction from the host computer 12. In the reproduction of motion picture data from the disc 13, the micro-computer 21 provides command signals to the servo controller 16. As is well known in the art, the servo controller 16 controls so that the disc 13 rotates at a predetermined rotational speed and the optical unit 14 seeks an appropriate position on the disc 13 to read the data therein.

A beam from a solid state laser in the optical unit 14, focused on the disc 13, is reflected differently with or without pits on the surface of the disc 13. The reflected laser beam is detected by a photo diode in the optical unit 14 which converts the light signal to an electric signal and supplies the electric signal to the RF amplifier 15. The RF amplifier 15 amplifies the electric signals to a sufficient level and provides a train of data in an electric signal form to the digital signal processor 17.

The digital signal processor 17 performs various signal processing functions including a demodulation of the data, a separation of right and left clock signals, and an error correction based on predetermined error correcting codes. The CD-ROM decoder 19 decodes the data from the digital signal processor 17 in a manner defined by an industry standard, such as an International Standard Organization (ISO) under the control of the micro-processor 21. The dynamic RAM 18 performs as a buffer for the decoder 19. The CD-ROM decoder 19 is used for decoding the data when the disc 13 works as a data base (CD-ROM) for the computer system. When reproducing the motion picture data, on the other hand, the data from the digital signal processor 17 pass through the CD-ROM decoder 19 and the interface bus 22 without decoding to the host computer 12.

In the host computer 12, the picture data is received by the CPU 26 through the interface bus 25. The CPU then distinguishes the received data and transfers the picture data to the add-on board 28 through the interface bus 25. The add-on board 28 is installed in the computer 12 for the purpose of reproducing the motion picture data from the compact disc 13. The add-on board includes a motion picture decoder (hereinafter "MPEG decoder") and a video processor. The MPEG decoder is provided for decoding the motion picture data which is data compressed in accordance with the proposed protocols by an MPEG (motion picture expert group) study group. The MPEG is becoming an industry standard for a motion picture data compression and decompression technology. Such an add-on board carrying the MPEG decoder is available in the market as, for example, "Reel Magic" by Sigma Design Corporation.

In the conventional motion picture reproduction system of Figure 6 as discussed above, the CPU 26 has to be involved in the reproduction of the picture data all through the process. For example, in the "Reel Magic" provided as the add-on board 28, the CPU has to distinguish the audio data and video data from the received data and transfer the distinguished data to the MPEG decoder in the add-on board through the interface bus 25. Therefore, the CPU 26 in the host computer has a significant burden in supporting the picture data reproduction and thus is prevented from performing other jobs for the computer system. Further, in case where a relatively longer time is required for an "access time" or a "seek time" for the optical unit 14 in the disc drive 11, there may arise a skip in the reproduced sounds or picture.

### Summary of the Invention

Therefore, it is an object of the present invention to provide a video disc drive which is capable of reproducing the motion picture data without involving a central processor of the host computer while maintaining the capability of conventional compact disc applications.

It is a further object of the present invention to provide a video disc drive which is capable of reproducing the motion picture data without skipping or losing the data even when the optical head of the video disc drive has undergone a long seek time.

It is a further object of the present invention to provide a video disc drive which has a new standard of interface structure for the motion picture reproduction.

The video disc drive of the present invention includes: an optical unit for providing an optical beam to a surface of a compact disc to sense a reflected optical beam indicative of pits on the compact disc and generating an electric signal corresponding to the sensed optical beam, a servo controller for controlling a rotation of the compact disc and positioning the optical unit on the surface of the compact disc, an amplifier for amplifying the electric signal from the optical unit to an amplitude greater than a predetermined level, a digital signal processor for demodulating the electric signal from the amplifier to reproduce digital data and error-correcting the digital data, a CD-ROM decoder for decoding the digital data from the digital signal processor and providing the decoded digital data to a host computer or other external device through a CD-ROM standard interface bus, an MPEG decoder for separating the video data from audio data from motion picture data from the digital signal processor and decoding the video data and the audio data based on an MPEG protocol and outputting the decoded video and audio data to an external monitor, and a micro-computer for controlling an overall operation of the disc drive based on the instruction from the host computer or other external device by controlling the servo controller, the CD-ROM decoder and the MPEG decoder.

EP-A-0691652, which is however relevant only under Art. 54(3) EPC and only for DE, FR and GB, already describes a disk drive of this kind (cf. figure 23). But it does not describe that the CD-ROM decoder provides the decoded digital data to a host computer or other external device, and in particular not through a CD-ROM standard interface.

According to the present invention, the disc drive can be used for a new application of reproducing a motion picture (CD-MPEG mode) which is stored in a compact disc in accordance with a format defined by the MPEG standard. The disc drive of the present invention can be used without requiring any specific changes for conventional compact disc applications such as a computer data base (CD-ROM mode) and a digital audio (CD-DA mode) as well.

In the present invention, the motion picture can be reproduced within the video disc drive without involvement of the host computer or other external devices. Namely, the central processor in the host computer does not have to participate in the reproduction of the motion picture data. The central processor merely involves at the start of operation by providing the command signal to the video disc drive. Therefore, the central processor can perform other jobs than the movie data reproduction. Furthermore, the reproduction of the motion picture data is accomplished without skipping of audio or video data even when the disc drive requires a relatively large seek time for positioning and reading the motion picture data from the compact disc, since the host computer does not participate in real time for reading the motion picture data.

Further, in the CD-MPEG mode, the motion picture data is reproduced in the similar manner to the CD-DA mode. Thus, the video disc drive of the present invention can use similar command sets as used in the digital audio application which is widely used in the industry such as an API (Application Program Interface) for a logic interface. Therefore, the present invention can provide an environment which is advantageous for application software designers since they can use the same or similar concepts familiar to them in the digital audio applications.

### Brief Description of the Drawings

Figure 1 is a block diagram showing a configuration of the video disc drive of the present invention.

Figure 2 is a graphic view showing a data flow and a command flow in the application of CD-ROM in accordance with the present invention.

Figure 3 is a graphic view showing a data flow and a command flow in the application of CD-DA (digital audio) in accordance with the present invention.

Figure 4 is a graphic view showing a data flow and a command flow in the application of CD-MPEG in accordance with the present invention.

Figure 5 is a block diagram showing an example of configuration for the MPEG decoder of Figure 1.

Figure 6 shows an example of conventional computer system for reproducing a motion picture data.

### Detailed Description of the Invention

The preferred embodiments of the present invention are discussed in the following with reference to the drawings.

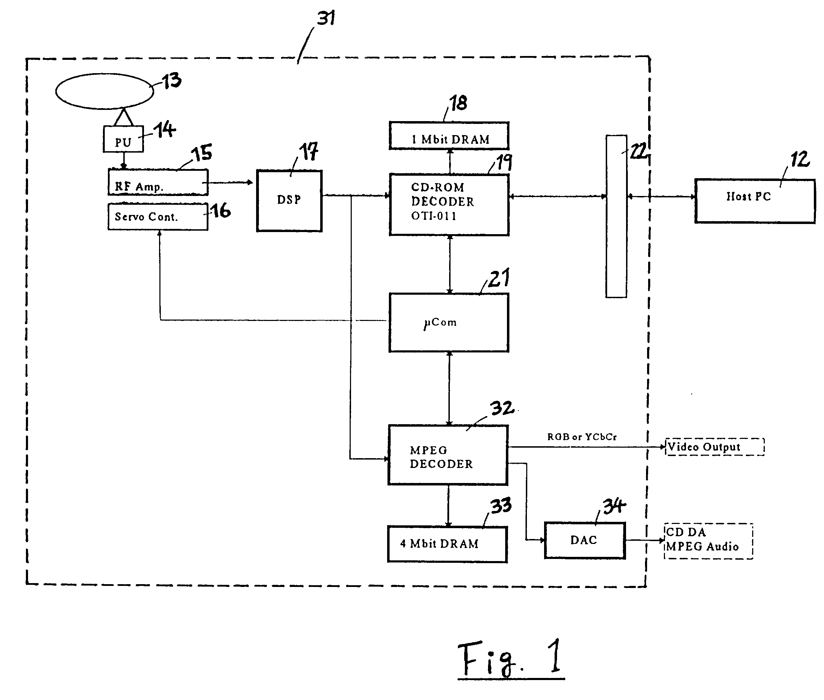

Figure 1 is a block diagram showing a circuit configuration of a video disc drive in accordance with the present invention. In Figure 1, the same reference numerals are used to designate the same or similar components shown in Figure 6. A video disc drive 31 includes a compact disc (CD) 13, an optical unit 14, an RF amplifier 15, a servo controller 16, a digital signal processor 17, a dynamic RAM 18, a CD-ROM decoder 19, a micro-computer 21 and an interface bus 22 as in the same way as shown in the conventional disc drive of Figure 6. Further, the video disc drive 31 includes an MPEG decoder 32, a dynamic RAM 33 and a digital-to-analog converter (DAC) 34. Although not shown, a ROM (read only memory) is connected to the MPEG decoder 32 to provide micro-commands for performing a decoding procedure.

The micro-computer 21 determines the mode of operation for the MPEG decoder 32 based on the instructions from the host computer 12 or other man-machine interface (a media-player such as a Karaoke set or a movie view machine). The output of the digital signal processor 17 is connected to the MPEG decoder 32 to provide, for example, serial data, LRCK (left and right clock) and BCK (bit clock). The output of the digital signal processor 17 is also connected to the CD-ROM decoder 19 as in the same way as the conventional disc drive of Figure 6. The dynamic RAM 33 works as a buffer for decoding process, i.e., a decompression operation performed by the MPEG decoder 32. The DAC 34 converts the digital audio signal to an analog audio signal so that the output thereof can be directly connected to a sound monitor, such as a speaker or a headphone. The video signal output from the MPEG decoder 32 may be provided to a display monitor, such as a computer screen, a large screen TV, or other monitors.

In the CD movie, the compact disc 13 stores the motion picture data in the compressed format as defined by the MPEG protocol through a predetermined modulation method. The digital signal processor 17 demodulates the picture data and performs an error correction operation on the picture data. The MPEG decoder 32 separates the audio data and the video data from the picture data received from the digital signal processor 17. The MPEG decoder 32 decodes the video data for decompression in accordance with the MPEG protocol. The decoded video data is provided to an external display monitor as described above. Such a display monitor may need to install a video processor to display the movie on a raster scanning screen.

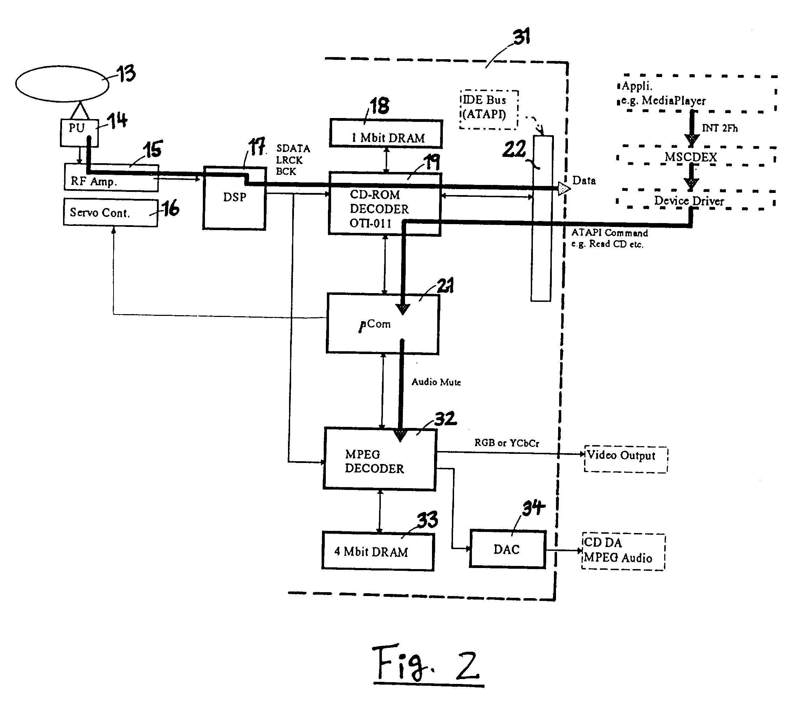

Figure 2 is a graphic view showing a data flow and a command flow in the application of CD-ROM in accordance with the present invention. In this application, the CD 13 is used as a ROM (read only memory) to provide a data base, such as an encyclopedia, a game software and the like, for a computer system.

By the command signal from the host computer or other media-player, a "CD-ROM" mode is set in the video disc drive 31. Such a mode setting is accomplished by, for example, supplying a "Read CD" command from the host computer to the micro-computer 21 in the videodisc drive 31 through the interface bus 22 and the CD-ROM decoder 19. In this mode, the micro-computer 21 disables the MPEG decoder 32 by, for example, an "Audio Mute" command.

As a result, the MPEG decoder 32 and the dynamic RAM 33 are excluded from the further operation. Thus, the video disc drive 31 performs as the same way in the conventional CD-ROM drive wherein the data from the digital signal processor 17 is provided to the host computer 12 or other media-player through the CD-ROM decoder 19 and the CD interface bus 22.

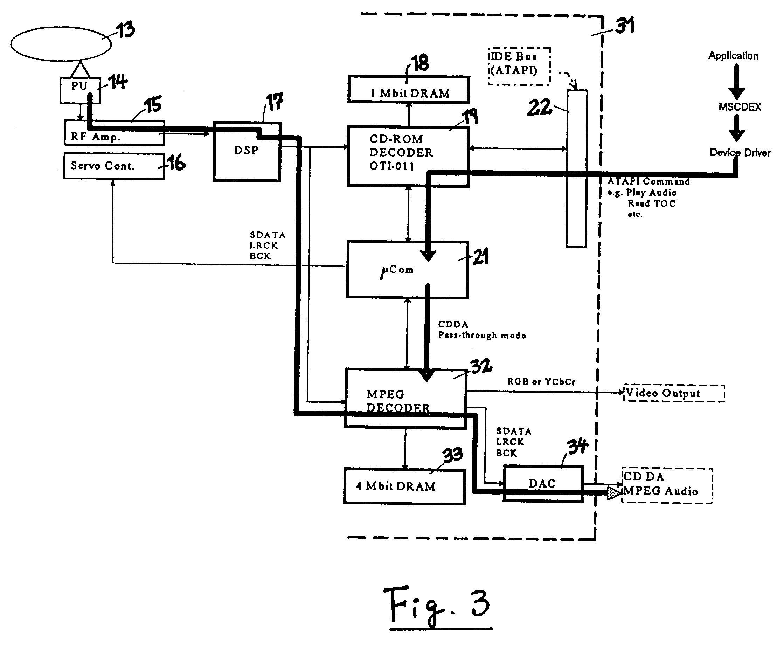

Figure 3 is a graphic view showing a data flow and a command flow in the application of CD-DA (digital audio) in accordance with the present invention. In this application, the CD 13 is used as an audio disc to provide a digital audio sound so that the system functions as a CD digital audio player.

By the command signal from the host computer or other media-player, a "CD-DA" mode is set in the video disc drive 31. Such a mode setting is accomplished by, for example, providing a "Play Audio" command from the host computer to the micro-computer 21 in the video disc drive 31 through the interface bus 22 and the CD-ROM decoder 19. In this mode, the micro-computer 21 provides a "Pass-Through" command to the MPEG decoder 32.

As a result, the MPEG decoder 32 simply transmits the data received from the digital signal processor 17 to the DAC 34 so that the DAC 34 outputs an audio signal for an external audio monitor, such as a speaker. Thus, the MPEG decoder 32 and the dynamic memory 33 do not undertake a signal processing or any specific functions in this mode. Further, the CD-ROM decoder 19 does not function in this mode. The audio data is provided from the MPEG decoder 32 to the DAC 34 wherein the audio data is converted to an analog signal for an external audio monitor such as a speaker or a headphone. Thus, the video disc drive 31 performs as the same way in the conventional CD audio player.

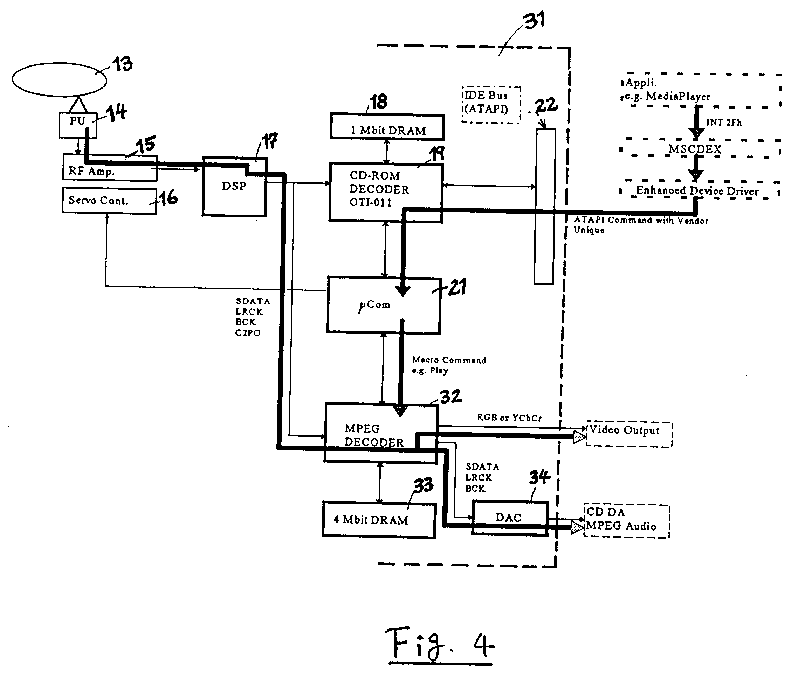

Figure 4 is a graphic view showing a data flow and a command flow in the application of motion picture reproduction (CD-MPEG) in accordance with the present invention. In this application, the CD 13 is used as a movie disc to provide a motion picture so that the system functions as a CD movie machine.

By the command signal from the host computer or other media-player (such as a movie player), a "CD-MPEG" mode is set in the video disc drive 31. Such a mode setting may be accomplished by a user unique command, for example, a "Play Movie" command from the movie player to the micro-computer 21 in the video disc drive 31 through the interface bus 22 and the CD-ROM decoder 19. In this mode, the micro-computer 21 provides a "Play" command to the MPEG decoder 32.

The MPEG decoder 32 separates the audio data from the video data in the data received from the digital signal processor 17. The MPEG decoder 32 decodes the video data and the audio data in accordance with the MPEG protocol. Similar to the CD-DA mode, the decoded audio data is converted to an analog signal by the DAC 34 so that the analog audio signal can be directly connected to an audio monitor. The decoded video data is output from the MPEG decoder 32 to a display monitor, such as a computer screen, a TV screen such as a large color TV monitor, or other video monitors.

In this CD-MPEG mode, a motion picture can be reproduced within the video disc drive 31 without involvement of the host computer or other external media-player. Namely, the central processor in the host computer does not have to participate in the reproduction of the motion picture data. The central processor merely involves at the start of operation by providing the command signal to the video disc drive 31 to initiate the operation. Therefore, the central processor can perform other jobs than the movie reproduction.

Further, in the CD-MPEG mode, the motion picture data is reproduced in the similar manner to that of the CD-DA mode as described above. The digital audio application for compact discs is the most standardized application in the industry. Therefore, the video disc drive of the present invention can use similar command sets as used in the digital audio application such as an API (Application Program Interface) for an logic interface, which will be advantageous for an application software designer.

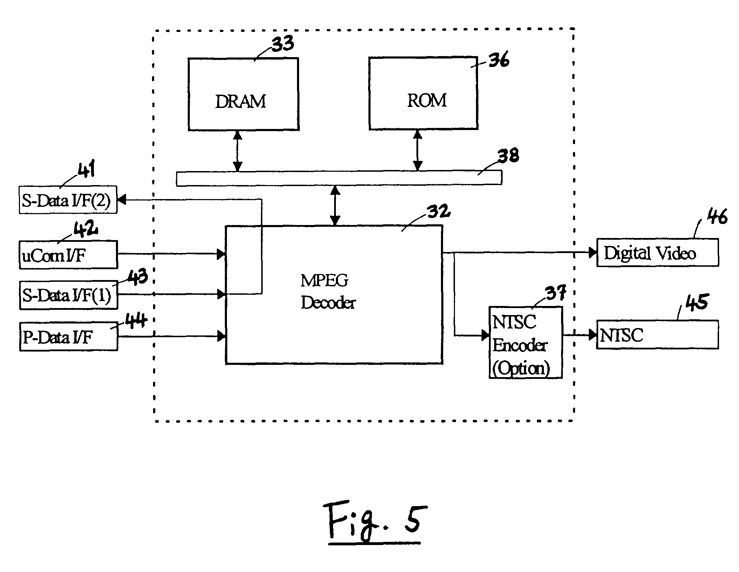

Figure 5 is a block diagram showing an example of more detailed structure of the MPEG decoder and its associated elements to be used in the present invention. The dynamic RAM 33 and a ROM 36 are connected to the MPEG decoder 32 through an interface bus 38. The dynamic RAM 33 functions as a buffer memory when the MPEG decoder 32 undertakes the decoding operation. The ROM 36 provides micro-commands to the MPEG decoder 32 for the decoding operation.

The MPEG decoder 32 is provided with various interfaces, a serial data interface 41 (outgoing), a micro-computer interface 42, a serial data interface 43 (incoming) and a parallel data interface 44. The MPEG decoder 32 receives the serial data from the digital signal processor 17 for the decoding operation such as signal decompression in the CD-MPEG mode. In the CD-DA mode, the serial data (audio data) pass through the MPEG decoder 32 to the digital-to-analog converter (DAC) 34 through the serial data interface 41. The parallel data interface 44 is provided to receive, for example, parallel data from the host computer in case where the host computer includes a data file to be processed by the MPEG decoder 32.

In the CD-MPEG mode, the decoded video signal is provided to a digital video display 46 such as a computer monitor. Optionally, the video disc drive of the present invention may include an NTSC encoder 37 for reproducing the video image on an NTSC TV screen 45, such as a large screen color TV monitor. The audio data is decoded by the MPEG decoder 32 and is transmitted to the DAC 34 through the serial data interface 41.

## Claims

1. A video disc drive, comprising:
an optical unit (14) for providing an optical beam to a surface of a compact disc (13) to sense reflected optical beam indicative of pits on said compact disc (13) and generating an electric signal corresponding to the sensed optical beam;
a servo controller (16) for controlling a rotation of said compact disc and positioning said optical unit on the surface of said compact disc (13);
an amplifier (15) for amplifying said electric signal from said optical unit to an amplitude greater than a predetermined level;
a digital signal processor (17) for demodulating the electric signal from said amplifier (15) to reproduce digital data and error correcting the digital data;
a CD-ROM decoder (19) for decoding the digital data from said digital signal processor (17) and providing the decoded digital data to a host computer (12) or other external device through a CD-ROM standard interface bus (22);
an MPEG decoder (32) for separating the video data from audio data from motion picture data from said digital signal processor (17) and decoding the video data and the audio data based on an MPEG protocol and outputting the decoded video and audio data to an external monitor;
a micro-computer (21) for controlling an overall operation of the disc drive based on the instruction from the host computer (12) or other external device by controlling the servo controller (16), the CD-ROM decoder (19) and the MPEG decoder (32).

2. A video disc drive as defined in Claim 1, wherein:
said MPEG decoder (32) is disabled by said microcomputer (21) when said disc drive is set to a CD-ROM mode wherein the compact disc (13) is used as a data base for the host computer (12).

3. A video disc drive as defined in Claim 1, wherein:
said MPEG decoder (32) receives the data from said digital signal processor (17) and provides the data as is to a digital-to-analog converter (34) when said disc drive is set to a CD-DA mode wherein the compact disc (13) is used as an audio disc to reproduce digital audio sounds by an external audio monitor.

4. A video disc drive as defined in Claim 1, wherein:
said MPEG decoder (32) is connected with a random access memory (33) which functions as a buffer for the decoding operation in the MPEG decoder (32), said MPEG decoder (32) being further connected with a read only memory (36) which provides micro-codes for the decoding operation in the MPEG decoder (32).

## Patentansprüche

1. Laufwerk für Video Disc, umfassend:
- eine optische Einheit (14) zum Liefern eines optischen Strahls an eine Oberfläche einer Compact Disc (13) zum Abtasten eines reflektierten optischen Strahls zur Anzeige von Pits auf der Compact Disc (13) und Erzeugen eines dem abgetasteten optischen Strahl entsprechenden elektrischen Signals;
- einen Servoregler (16) zum Steuern einer Rotation der Compact Disc und Positionieren der optischen Einheit auf der Oberfläche der Compact Disc (13);
- einen Verstärker (15) zum Verstärken des elektrischen Signals von der optischen Einheit auf eine Amplitude, die größer ist als ein vorbestimmter Wert;
- einen Digitalsignalprozessor (17) zum Demodulieren des elektrischen Signals von dem Verstärker (15) zur Wiedergabe digitaler Daten und Berichtigen von Fehlern in den digitalen Daten;
- eine CD-ROM-Decodiereinrichtung (19) zum Decodieren der digitalen Daten von dem Digitalsignalprozessor (17) und Liefern der decodierten digitalen Daten über einen CD-ROM-Standard-Schnittstellenbus (22) an einen Host-Computer (12) oder eine andere externe Vorrichtung;
- eine MPEG-Decodiereinrichtung (32) zum Trennen der Videodaten von Audiodaten von Laufbilddaten von dem Digitalsignalprozessor (17) und Decodieren der Videodaten und der Audiodaten gestützt auf ein MPEG-Protokoll und Ausgeben der decodierten Video- und Audiodaten an ein externes Überwachungssystem;
- einen Mikrocomputer (21) zum Steuern eines Gesamtbetriebs des Disc-Laufwerks gestützt auf den Befehl von dem Host-Computer (12) oder einer anderen externen Vorrichtung durch Steuern des Servoreglers (16), der CD-ROM-Decodiereinrichtung (19) und der MPEG-Decodiereinrichtung (32).

2. Laufwerk für Video Disc nach Anspruch 1, wobei die MPEG-Decodiereinrichtung (32) durch den Mikrocomputer (21) gesperrt wird, wenn das Disc-Laufwerk auf einen CD-ROM-Modus eingestellt ist, wobei die Compact Disc (13) als Datenbank für den Host-Computer (12) verwendet wird.

3. Laufwerk für Video Disc nach Anspruch 1, wobei die MPEG-Decodiereinrichtung (32) die Daten von dem Digitalsignalprozessor (17) erhält und die Daten unverändert an einen Digital/Analog-Wandler (34) liefert, wenn das Disc-Laufwerk auf einen CD-DA-Modus eingestellt ist, wobei die Compact Disc (13) als Audio-Disc verwendet wird, um digitale Audiotöne durch ein externes Audio-Überwachungssystem wiederzugeben.

4. Laufwerk für Video Disc nach Anspruch 1, wobei die MPEG-Decodiereinrichtung (32) mit einem Direktzugriffsspeicher (33) verbunden ist, der als Pufferspeicher für den Decodierbetrieb in der MPEG-Decodiereinrichtung (32) dient, wobei die MPEG-Decodiereinrichtung (32) ferner mit einem Nur-Lese-Speicher (36) verbunden ist, der Microcodes für den Decodierbetrieb in der MPEG-Decodiereinrichtung (32) bereitstellt.

## Revendications

1. Lecteur de disque vidéo, comprenant :
une unité optique (14) servant à appliquer un faisceau optique à une surface d'un disque dit compact (13) afin qu'il soit détecté un faisceau optique réfléchi indicatif d'alvéoles présentes sur ledit disque compact (13) et à produire un signal électrique correspondant au faisceau optique détecté ;
un dispositif de commande d'asservissement (16) servant à commander la rotation dudit disque compact et à positionner ladite unité optique sur la surface dudit disque compact (13) ;
un amplificateur (15) servant à amplifier ledit signal électrique venant de ladite unité optique jusqu'à une amplitude supérieure à un niveau prédéterminé ;
un dispositif (17) de traitement de signaux numériques servant à démoduler le signal électrique venant dudit amplificateur (15) afin de reproduire des données numériques et de corriger des erreurs dans les données numériques ;
un décodeur de CD-ROM (19) servant à décoder les données numériques venant dudit dispositif (17) de traitement de signaux numériques et à fournir les données numériques décodées à un ordinateur principal (12), ou à un autre dispositif externe, via un bus d'interface normalisée de CD-ROM (22) ;
un décodeur MPEG (32) servant à séparer les données vidéo vis-à-vis des données audio dans les données d'images mobiles venant dudit dispositif (17) de traitement de signaux numériques, à décoder les données vidéo et les données audio sur la base d'un protocole MPEG, et à délivrer les données vidéo et audio décodées à un dispositif de contrôle, ou moniteur externe ;
un micro-ordinateur (21) servant à commander le fonctionnement général du lecteur de disque sur la base de l'instruction venant de l'ordinateur principal (12), ou d'un autre dispositif externe, par la commande du dispositif de commande d'asservissement (16), du décodeur de CD-ROM (19) et du décodeur MPEG (32).

2. Lecteur de disque vidéo selon la revendication 1, où :
ledit décodeur MPEG (32) est invalidé par ledit micro-ordinateur (21) lorsque ledit lecteur de disque est positionné dans un mode CD-ROM, où le disque compact (13) est utilisé comme base de données pour l'ordinateur principal (12).

3. Lecteur de disque vidéo selon la revendication 1, où :
le décodeur MPEG (32) reçoit les données venant dudit dispositif (17) de traitement de signaux numériques et fournit les données telles qu'elles sont à un convertisseur numérique-analogique (34) lorsque ledit lecteur de disque est positionné dans un mode CD-DA, où le disque compact (13) est utilisé comme disque audio, en vue de la reproduction de sons audio numériques par un dispositif de contrôle, ou moniteur audio externe.

4. Lecteur de disque vidéo selon la revendication 1, où :
ledit décodeur MPEG (32) est connecté à une mémoire vive (33) qui fait fonction de tampon pendant l'opération de décodage ayant lieu dans le décodeur MPEG (32), ledit décodeur MPEG (32) étant en outre connecté à une mémoire morte (36) qui fournit des micro-codes pendant l'opération de décodage ayant lieu dans le décodeur MPEG (32).
